# EUROPÄISCHE PATENTSCHRIFT

(11) **EP 2 994 650 B1**
(45) Veröffentlichungstag und Bekanntmachung des Hinweises auf die Patenterteilung: **07.06.2017**
(21) Anmeldenummer: 14728413.7
(22) Anmeldetag: 17.04.2014
(51) Int. Cl.: F16C 1/10, E05B 79/16, E05B 79/20

(54) **BEFESTIGUNGSELEMENT ZUR ANBINDUNG VON ÜBERTRAGUNGSMITTELN AN EIN HEBELELEMENT**
FIXING ELEMENT FOR CONNECTING TRANSMISSION MEANS TO A LEVER ELEMENT
ÉLÉMENT DE FIXATION POUR LA CONNECTION D'UN SUPPORT DE TRANSMISSION À UN ÉLÉMENT DE LEVIER

(30) Priorität: 10.05.2013 DE 102013208652
(43) Veröffentlichungstag der Anmeldung: 16.03.2016
(73) Patentinhaber: Kiekert Aktiengesellschaft, 42579 Heiligenhaus (DE)
(72) Erfinder: HEIDE, Thomas, 45259 Essen (DE)
(74) Vertreter: Wachtling, Bernd
(86) Internationale Anmeldenummer: PCT/DE2014/000201
(87) Internationale Veröffentlichungsnummer: WO 2014/180457

(56) Entgegenhaltungen:
- EP-A1- 0 183 019
- DE-A1- 19 807 084
- DE-A1- 19 961 824
- DE-A1-102010 015 058
- DE-C1- 19 546 469

## Beschreibung

Die Erfindung betrifft ein Befestigungselement zur Anbindung von Übertragungsmitteln wie Zugstangen, Bowdenzüge o. dgl. an ein Hebelelement gemäß dem Oberbegriff von Anspruch 1 sowie eine Anbindungsanordnung mit einem derartigen Befestigungselement insbesondere für Kraftfahrzeugschlösser.

Befestigungselemente der in Rede stehenden Art können in verschiedenen Bereichen eines Kraftfahrzeugs Anwendung finden. Vorliegend steht insbesondere die Anwendung im Rahmen einer Betätigungs-Kraftwirkungskette zwischen einem Kraftfahrzeugschloss und einem Betätigungselement zur Betätigung des Kraftfahrzeugschlosses im Vordergrund. Bei der Schließeinrichtung kann es sich beispielsweise um Türen, Schiebetüren, Heckdeckel, Motorhauben o. dgl. eines Kraftfahrzeugs handeln.

Es ist bekannt, Verriegelungselemente für eine Verbindungsstange zwischen einer Betätigungs- und/oder Verriegelungseinrichtung und einem Betätigungs- und/oder Riegelelement mit einem Clipelement auszugestalten. Der grundsätzliche Aufbau einer solchen Anordnung ist in der DE 10 2010 015 058 A1 gezeigt. Das Clipelement ist dabei zweiteilig gestaltet und durch dessen Teilelemente gegen Heraushebeln gesichert. Die über einen gemeinsamen Steg miteinander verbundenen Teilelemente sind längsparallel zur Verbindungsstange bewegbar und so ausgestaltet, dass ein Teilelement an ein Endstück der Verbindungsstange angelegt werden kann.

Zwar erlaubt das Verriegelungselement die Realisierung der geforderten Funktionalität in Bezug auf ein Sichern einer Verbindungsstange gegen selbsttätiges Lösen. Allerdings ist der zweiteilige Aufbau des Clipelements konstruktiv sowie fertigungstechnisch nicht zufriedenstellend. Ferner erschwert der Aufbau mit separaten Teilelementen die Montage, was im Nachhinein zu Problemen in der geforderten Funktionalität des montierten Verriegelungselements führen kann. DE 198 07 084 A1 beschreibt ein Befestigungselement sowie eine Anbindungsanordnung gemäß dem Oberbegriffs des Anspruchs 1.

EP 0 183 019 A1 beschreibt ein Befestigungselement zur Anbindung von Bowdenzüge an ein Hebelelement sowie eine Anbindungsanordnung mit einem schwenkbar gelagerten Hebelelement und einem derartigen Befestigungselement. Dieses bekannte Befestigungselement ist als Bowdenzugklip ausgebildet. Der Erfindung liegt die Aufgabe zugrunde, ein Befestigungselement sowie eine Anbindungsanordnung zu verbessern und weiterzubilden, und zwar insbesondere derart, dass die oben genannten Nachteile mit einfachen konstruktiven Mitteln beseitigt werden.

Die Aufgabe wird durch ein Befestigungselement gemäß Anspruch 1 sowie einer Anbindungsanordnung gemäß Anspruch 8 gelöst. Vorteilhafte Weiterbildungen und Ausgestaltungen ergeben sich aus den Unteransprüchen.

Wesentlich ist die Überlegung, am Befestigungselement eine Bajonettkontur vorzusehen, so dass das Befestigungselement im montierten Zustand - also in dem in der Öffnung des Hebelelements verbundenen Zustand - um eine Verschwenkachse schwenkbar am Hebelelement angelenkt ist. Die Bajonettkontur ermöglicht zunächst eine einfach herstellbare mechanische Verbindung des Befestigungselements in der Öffnung des Hebelelements. Die Bajonettkontur ist vorzugsweise so gestaltet, dass das Befestigungselement durch Einführen und Drehen in der Öffnung des Hebelelements mit diesem verbunden werden kann. Außerdem weist das Befestigungselement einen senkrecht zu dessen Verschwenkachse verlaufenden stegförmigen Bereich auf, der vorzugsweise im montierten Zustand des Befestigungselements mit dem Hebelelement zur Anlage kommt. Mit dem senkrecht zur Verschwenkachse verlaufenden stegförmigen Bereich lässt sich eine weitere Stabilisierung des Befestigungselements insbesondere im montierten Zustand in Verbindung mit dem zur Anlage kommenden Hebelelement realisieren. Interessant ist bei der vorschlagsgemäßen Lösung darüber hinaus, dass das Befestigungselement um eine Verschwenkachse schwenkbar am Hebelelement angelenkt werden kann. Die Anbindung eines Übertragungsmittels wie einer Zugstange, einem Bowdenzug o. dgl. kann dann, beispielsweise an dem als Buchse ausgebildeten Befestigungselement, sicher realisiert werden, ohne dass die Gefahr besteht, dass die Anbindung aufgrund dynamischer Belastungen selbsttätig gelöst wird oder Schaden nimmt.

Ferner ermöglicht die vorschlagsgemäße Lösung eine Verliersicherung des montierten in der Öffnung des Hebelelements montierten Befestigungselements, ohne dass separate Sicherungselemente vorgesehen sein müssen. Auf die Montage separater Sicherungselemente kann insoweit verzichtet werden und fehlerhafte Montagen lassen sich zuverlässig vermeiden.

Bei einer bevorzugten Ausführungsform der Erfindung weist das Befestigungselement ein oder mehrere bezogen auf die Verschwenkachse des Befestigungselements radiale Vorsprünge auf. In Verbindung mit der Öffnung des Hebelelements stellen diese eine einfach herzustellende und/oder lösbare Verbindung nach Art eines Bajonettverschlusses bereit. Vorzugsweise sind wenigstens zwei Vorsprünge an gegenüberliegenden Seiten des Befestigungselements vorgesehen, um eine stabile Kopplung zwischen dem Befestigungselement und dem Hebelelement zu ermöglichen.

In besonders bevorzugter Ausgestaltung weist das Befestigungselement einen sich parallel zu dessen Verschwenkachse erstreckenden zapfenförmigen Bereich auf. Der parallel zur Verschwenkachse verlaufende zapfenförmige Bereich bildet eine konstruktiv stabile Ausführung des Befestigungselements. Vorzugsweise ist der zapfenförmige Bereich im Inneren als Buchse ausgestaltet, um so auf einfache Weise eine Anbindungsmöglichkeit für ein Übertragungsmittel wie einer Zugstange, einem Bowdenzug o. dgl. bereitzustellen.

Bei einer weiter bevorzugten Ausgestaltung ist am stegförmigen Bereich ein sich im Wesentlichen parallel zur Verschwenkachse erstreckender Fortsatz vorgesehen, der insbesondere im montierten Zustand des Befestigungselement an einer Außenkontur des Hebelelements verschwenkbar anliegen kann bzw. anliegt. Hiermit lässt sich besonders einfach eine sichere Führung und Stabilisierung des Befestigungselements am verbundenen Hebelelement realisieren. Der Fortsatz kann zweckmäßig auch an der der Außenkontur des Hebelelements zugewandten Seite eine Abkantung aufweisen. Mit "Abkantung" ist gemeint, dass der Fortsatz an der der Außenkontur zugewandten Seite einen hervorstehenden Abschnitt aufweist, der im Wesentlichen kantenförmig ausgebildet ist. Die Abkantung kann entsprechend auch abgerundet und/oder abgeflacht gestaltet sein. Demgemäß lässt sich eine gezielte und verbesserte Führung sowie Stabilisierung des Befestigungselements an der Außenkontur des Hebelelements erzielt.

Alternativ oder ergänzend kann der Fortsatz auch im Wesentlichen stiftförmig ausgebildet sein. Es ist möglich, den stiftförmigen Fortsatz vom Profil her betrachtet rund, quadratisch oder aber auch abgeflacht auszubilden. Die Längserstreckung des Fortsatzes verläuft dann vorzugsweise parallel zur Verschwenkachse des Befestigungselements.

Der stiftförmige Fortsatz dient der verbesserten Abstützung und Stabilisierung des Befestigungselements am Hebelelement, so dass insbesondere die in der Regel mit hohen Taktzeiten verbundenen Montagearbeiten wie z.B. das Einfügen und gegebenenfalls Lösen von Übertragungsmittels wie Zugstangen besonders einfach durchgeführt werden können.

In weiterer Ausgestaltung ist der stegförmige Bereich bezogen auf die Verschwenkachse des Befestigungselements auf der Seite des Fortsatzes länger ausgestaltet. Vorzugsweise ist auf dieser Seite eine Aussparung des stegförmigen Bereichs vorgesehen. Dies ermöglicht eine Gewichts-reduzierung und konstruktive Aussteifung des Befestigungselements.

Der zapfenförmige Bereich kann zweckmäßig auch unterschiedlich dimensionierte radiale Vorsprünge aufweisen. Vorzugsweise ist dann der größer dimensionierte Vorsprung bezogen auf die Verschwenkachse des Befestigungselements auf der Seite des Fortsatzes angeordnet. Hiermit lässt sich ein besonders stabiler und sicherer Eingriff der Bajonettkontur in der Öffnung des Hebelelements realisieren, indem die radialen Vorsprünge in Verbindung mit dem stegförmigen Bereich den entsprechenden Bereich der Öffnung des Hebelelements sicher umgreifen.

In bevorzugter Ausgestaltung ist das Befestigungselement, insbesondere der
stegförmige Bereich gegebenenfalls mit daran anschließendem Fortsatz, zumindest bereichsweise federelastisch verformbar ausgebildet. Vorzugsweise ist das Befestigungselement aus einem Kunststoff hergestellt. Die federelastische Verformbarkeit des Befestigungselements insbesondere des stegförmigen Bereichs und gegebenenfalls des Fortsatzes ermöglichen die Verbindung mit der Öffnung des Hebelelements nach Art einer Federklemme. Auf diese Weise lässt sich eine selbsthemmende Kopplung zwischen Befestigungselement und Öffnung des Hebelelements realisieren. Vorzugsweise ist die Anordnung so getroffen, dass der Fortsatz des stegförmigen Bereichs beim Drehen des Befestigungselements in der Öffnung des Hebelelements ausgelenkt wird und dann einrastet.

Nach einem weiteren Aspekt der Erfindung wird eine Anbindungsanordnung mit einem vorschlagsgemäßen Befestigungselement als solche beansprucht. Auf alle Ausführungen, die geeignet sind, die Anbindungsanordnung zu beschreiben, darf verwiesen werden.

Um eine entsprechende Kopplung des Befestigungselements mit dem Hebelelement zu ermöglichen, kann die Öffnung des Hebelelements zweckmäßig bezogen auf deren Umfang wenigstens eine radial erstreckende Ausnehmung aufweisen, die insbesondere korrespondierend zu dem Vorsprung des Befestigungselements ausgestaltet ist. Werden beispielsweise mehrere Vorsprünge am Befestigungselement vorgesehen, so können mehrere entsprechende Ausnehmungen an der Öffnung des Hebelelements vorgesehen werden, um eine einfache Verbindung durch Einführen und Drehen nach Art eines Bajonettverschlusses zu ermöglichen.

Besonders vorteilhaft ist es, benachbart zur Öffnung des Hebelelements eine Außenkontur für das Zusammenwirken mit dem Befestigungselement und gegebenenfalls dem Fortsatz des stegförmigen Bereichs vorzusehen. Ganz besonders vorteilhaft ist die Außenkontur so getroffen, dass ein vorbestimmter Schwenkbereich für das Befestigungselement bereitgestellt wird. Hiermit lässt sich gezielt eine Verschwenkbarkeit des Befestigungselements einstellen und eine verbesserte stabile Führung des Befestigungselements realisieren, so dass insbesondere ein selbsttätiges oder unbeabsichtigtes Lösen des Befestigungselements verhindert wird. Die Außenkontur kann zweckmäßig einen Endanschlag aufweisen, der beispielsweise auf einer Seite der Außenkontur ein weitergehendes Verschwenken des Befestigungselements verhindert. Alternativ oder ergänzend kann zweckmäßig ein Begrenzungsabschnitt vorgesehen werden, wobei der Begrenzungsabschnitt bezogen auf die Verschwenkachse des Befestigungselements als radiale Erhebung ausgeführt ist. Vorzugsweise ist der Begrenzungsabschnitt so getroffen, dass das Befestigungselement nur federelastisch verformend über den Begrenzungsabschnitt hinweg geführt werden kann. Hiermit lässt sich das Befestigungselement selbsthemmend an der Außenkontur des Hebelelements koppeln und gleichzeitig ein vorbestimmter Schwenkbereich des Befestigungselements erzielen.

Im Folgenden wird die Erfindung anhand von lediglich ein Ausführungsbeispiel darstellenden Zeichnungen näher erläutert. In den Zeichnungen zeigen:
- Fig. 1a: eine Vorderansicht eines Befestigungselement,
- Fig. 1b: eine Schnittansicht (A-A) des Befestigungselements,
- Fig. 1c: eine Draufsicht auf das Befestigungselement und
- Fig. 2: eine schematische Ansicht eines Hebelelements.

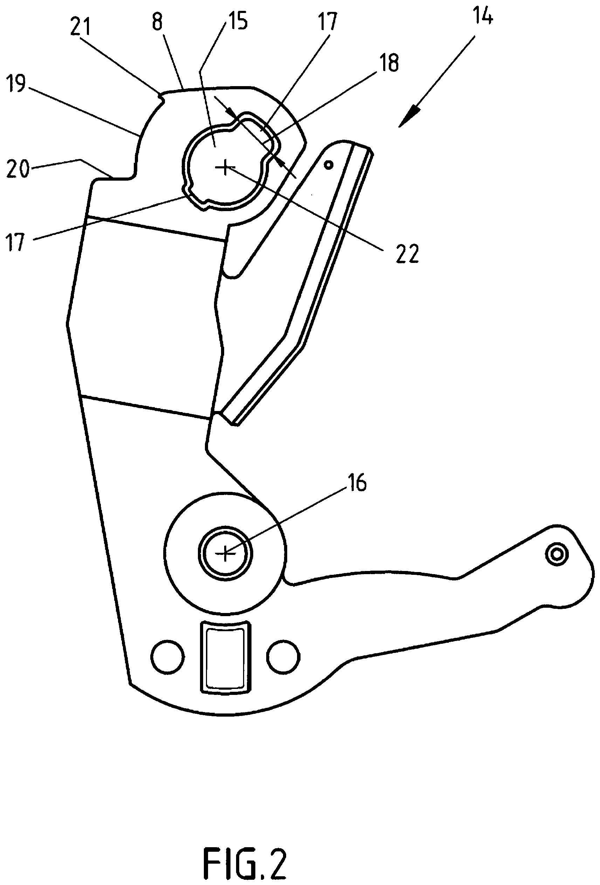

Es darf darauf hingewiesen werden, dass das vorschlagsgemäße Befestigungselement 1 und die Anbindungsanordnung in allen denkbaren Bereichen eines Kraftfahrzeugs anwendbar sind, in denen Übertragungsmittel wie Zugstangen, Bowdenzüge o. dgl. an entsprechende Hebelelemente 14 im Rahmen einer Kraftwirkungs-Betätigungskette angebunden werden sollen. In besonders bevorzugter Ausgestaltung findet das vorschlagsgemäße Befestigungselement 1 bzw. die Anbindungs-anordnung allerdings Anwendung im Rahmen einer Kraftwirkungs-Betätigungskette zwischen einem Kraftfahrzeugschloss und einem Betätigungselement zur Betätigung des Kraftfahrzeugschlosses. Fig. 2 betrifft entsprechend einen hier für ein Kraftfahrzeugschloss ausgestalteten Innenverriegelungshebel.

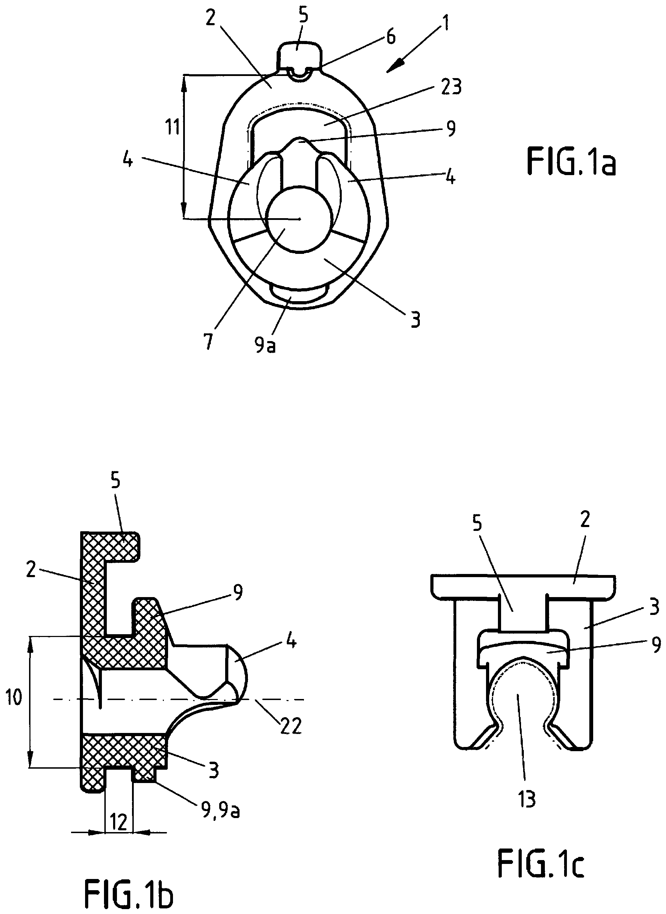

Das in Rede stehende Befestigungselement 1 ist wie in den Figuren 1a bis 1 c
gezeigt mit einem zapfenförmigen Bereich 3 und einem stegförmigen Bereich 2 ausgestattet. Der zapfenförmige Bereich 3 wird bei der Verbindung mit einem Hebelelement in die Öffnung 15 des Hebelelements eingeführt. Der stegförmige Bereich 2 liegt im montierten Zustand an einer Seite des Hebelelements 14 verschwenkbar an, um eine stabile Führung zu erreichen. Nach Innen hin weist der stegförmige Bereich 2 eine Aussparung 23 auf.

Wesentlich ist nun, dass das Befestigungselement 1 eine Bajonettkontur aufweist, und zwar dergestalt, dass das Befestigungselement im montierten Zustand um die Verschwenkachse 22 schwenkbar am Hebelelement angelenkt ist. Der zapfenförmige Bereich 3 verläuft im Wesentlichen parallel zur Verschwenkachse 22 und ist vorzugsweise zur Mitte hin als Buchse 7 augestaltet, um eine einfache Anbindung eines Übertragungsmittels wie einer Zugstange zu ermöglichen. Der stegförmige Bereich 2 erstreckt sich im Wesentlichen senkrecht zur Verschwenkachse 22.

Wie aus Fig. 1a ersichtlich kann der zapfenförmige Bereich 2 ferner hervorstehende Anschläge 4 aufweisen, die einen verbesserten Anschluss eines Übertragungselements und gegebenenfalls eine Verdrehbegrenzung bereitstellen.

Fig. 1b zeigt eine Schnittansicht (A-A) und verdeutlicht die bezogen auf die Verschwenkachse 22 radial hervorstehenden Vorsprünge 9, die auch als hervorstehende Nase 9a ausgebildet werden kann. In Verbindung mit dem zapfenförmigen Bereich 3 sowie dem stegförmigen Bereich 2 kann nach Art eines Bajonettverschlusses eine schwenkbare Kopplung mit dem Hebelelement 14 realisiert werden. Die Kopplung wird grundsätzlich durch Einführen des Befestigungselements 1 in die Öffnung 15 des Hebelelements und anschließendem Drehen des Befestigungselements 1 erzielt.

Bei den in den Fig. 1a bis Fig. 1c dargestellten Ausführungsbeispielen ist ein parallel zur Verschwenkachse 22 verlaufender Fortsatz 5 des stegförmigen Bereichs 2 vorgesehen. Dieser Fortsatz 5 kann wie dargestellt als stiftförmiger abgeflachter Fortsatz 5 ausgestaltet sein und sich z.B. bezogen auf den Verlauf der Verschwenkachse 22 bis zur Höhe des radialen Vorsprungs 9 und 9a erstrecken. Der Abstand des Vorsprungs 9 bzw. Nase 9a zum stegförmigen Bereich 2 ist dann vorzugsweise zwischen 1.5 bis 2 mm. Im montierten Zustand liegt der Fortsatz 5 des stegförmigen Bereichs 2 an einer Außenkontur 19 des Hebelelements an, um eine verbesserte Führung des Befestigungselement 1 am Hebelelement 14 zu ermöglichen. Entsprechend ist der stegförmige Bereich 2 bezogen auf die Verschwenkachse 22 auf der Seite des Fortsatzes 5 länger ausgebildet und weist vorzugsweise eine Aussparung 23 zur Mitte hin auf. Einzelheiten zur Außenkontur 19 des Hebelelements 14 werden weiter unten erläutert.

Die radialen Vorsprünge 9 und 9a sind hier unterschiedlich dimensioniert, wobei der größer dimensionierte Vorsprung 9 bezogen auf die Verschwenkachse 22 auf der Seite des Fortsatzes 5 angeordnet ist. Der als Nase 9a ausgestaltete Vorsprung ist dann auf der gegenüberliegenden Seite des zapfenförmigen Bereichs 3 angeordnet.

Der zapfenförmige Bereich 3 des Befestigungselement weist beispielsweise einen äußeren Durchmesser 10 von 5 bis 11 mm auf. Zur Verschwenkachse 22 hin ist der zapfenförmigen Bereichs 3 vorzugsweise als Buchse 7 ausgestaltet, um eine einfache Verbindung eines Übertragungsmittels zu ermöglichen. Der Durchmesser der Buchse 7 ist beispielsweise zwischen 3 und 5 mm. Das Befestigungselement 1 ist vorzugsweise einstückig aus Kunststoff hergestellt. Der stegförmige Bereich 2 und der daran angeschlossene Fortsatz 5 sind zumindest bereichsweise federelastisch verformend ausgeführt, um eine federelastische Auslenkung des Fortsatzes 5 für eine Verbindung nach Art einer Federklemme zu ermöglichen. Der Fortsatz 5 weist hier auch eine Abkantung 6 an der der Außenkontur 19 des Hebelelements 14 zugewandten Seite auf. Die Abkantung 6 ist vorzugsweise in Richtung der Verschwenkachse 22 hin ausgerichtet. Die Abkantung 6 kann grundsätzlich auch mit einer gerundeten bzw. abgeflachten hervorstehenden Kante ausgestaltet werden, um eine sichere Führung des Befestigungselements 1 an der Außenkontur 19 des Hebelelements zu erzielen. Der Abstand 11 der Abkantung 6 zur Verschwenkachse 22 des Befestigungselements 1 ist beispielsweise zwischen 6 und 11 mm gewählt.

Fig. 1c zeigt das Befestigungselement in einer Draufsicht. Der zapfenförmige Bereich 3 ist hier - also von der Seite des Fortsatzes 5 her betrachtet - vorzugsweise so ausgestaltet, dass senkrecht zur Verschwenkachse 22 ein einseitig offener, im Wesentlichen kreisförmiger Durchgang 13 gebildet wird. Der Durchgang 13 kann z.B. als Anschluss für ein Übertragungsmittel wie einer Zugstange dienen. Der Durchgang 13 kann dann so ausgestaltet sein, dass ein Übertragungsmittel durch federelastische Verformung aufgenommen werden kann.

Fig. 2 zeigt das Hebelelement 14, das zur Betätigung um eine Hebelachse 16 schwenkbar gelagert ist. Dabei ist das Hebelelement 14 mit einer exzentrisch zu der Hebelachse 16 angeordneten Öffnung 15 für das Ein- oder Ausleiten von Betätigungsbewegungen ausgestattet. Die Öffnung 15 dient der Aufnahme des Befestigungselements 1, um so eine schwenkbare Anbindung eines Übertragungsmittels wie einer Zugstange, eines Bowdenzugs o. dgl. am Hebelelement 14 zu erreichen. An der Öffnung 15 sind bezogen auf die Verschwenkachse 22 radial erstreckende Ausnehmungen 17 vorgesehen, die vorzugsweise an gegenüberliegenden Seiten der Öffnung 15 angeordnet sind. Die Dimensionierung der Ausnehmungen 17 ist insbesondere so getroffen, dass ein Einführen des Befestigungselements 1 von dem zapfenförmigen Bereich 3 her nebst radialer Vorsprünge 9 und 9a möglich ist. Durch anschließendes Drehen des Befestigungselements 1 wird eine verschwenkbare Kopplung zwischen Befestigungselement 1 und Hebelelement 14 bereitgestellt. Der kreisförmige Bereich der Öffnung 15 weist vorzugsweise einen Durchmesser zwischen 6 bis 11 mm auf. Vorzugsweise sind zwei unterschiedlich dimensionierte Ausnehmungen 17 an der Öffnung 15 vorgesehen. Die größer dimensionierte Ausnehmung 17 weist dann beispielsweise über den Umfang der Öffnung 15 betrachtet eine Breite 18 von 5 bis 7 mm auf. Mit den unterschiedlich dimensionierten Ausnehmungen 17 lässt sich eine Fehlmontage des Befestigungselements 1 am Hebelelement 14 verhindern.

Vorzugsweise ist es so, dass benachbart zur Öffnung 15 des Hebelelements 14 eine Außenkontur 19 vorgesehen ist. Diese ermöglicht im montierten Zustand das Zusammenwirken mit dem Fortsatz 5 des Befestigungselements 1 für die Verschwenkbarkeit in einem vorbestimmten Schwenkbereich. Die Außenkontur 19 ist insbesondere so getroffen, dass an einer Seite ein Endanschlag 20 vorgesehen ist, der den Schwenkbereich des Befestigungselements 1 sicher begrenzt, und ergänzend auf der anderen Seite der Außenkontur 19 ein Begrenzungsabschnitt 21 vorhanden ist, der bezogen auf die Verschwenkachse 22 des Befestigungselements als radiale Erhebung ausgebildet ist. Der Begrenzungsabschnitt 21 ist vorzugsweise so ausgebildet, dass das Befestigungselement 1 nur federelastisch verformend über den Begrenzungsabschnitt 21 hinweg geführt werden kann. Vorzugsweise ist der Begrenzungsabschnitt 21 auf der Seite der Außenkontur 19 mit einem steileren Winkel als auf dem zur Außenkontur 19 hinführenden Auslenkungsabschnitt 8 ausgeführt. Der Auslenkungsabschnitt 8 ist insbesondere so ausgestaltet, dass der radiale Abstand zur Verschwenkungsachse 28 zum Begrenzungsabschnitt 21 hin stetig ansteigt. Dagegen weist die Außenkontur 19 auf der Seite des Begrenzungsabschnitts 21 vorzugsweise einen im Vergleich dazu steileren Winkel auf, um ein selbsttätiges Lösen des Befestigungselements 1 zuverlässig zu verhindern. Der federelastisch verformbare Fortsatz 5 des Befestigungselements 1 ermöglicht so eine einfache und sichere Montage des Befestigungselements 1 am Hebelelement, so dass eine Verliersicherung des Befestigungselement 1 gewährleistet wird und zugleich fehlerhafte Montagen und damit einhergehende Mängel der Anbindungsanordnung vermieden werden. Die Außenkontur 19 ist vorzugsweise mit einem Radius zwischen 8 und 9 mm zur Verschwenkachse 22 angeordnet. Der von der Außenkontur 19 gebildete Kreisbogen umschließt dann insbesondere einen Winkel von 40 bis 50 °.

Bei den dargestellten und insoweit bevorzugten Ausführungsbeispielen ist das Befestigungselement 1 und das Hebelelement 14 einstückig ausgestaltet. Dadurch lässt sich das Befestigungselement 1 bzw. das Hebelelement 14 mit geringem fertigungstechnischem Aufwand herstellen. Das Hebelelement 14 weist vorzugsweise eine Stärke von 1 bis 2 mm auf.

### Bezugszeichen:

- 1: Befestigungselement
- 2: stegförmiger Bereich
- 3: zapfenförmiger Bereich
- 4: Anschlag
- 5: Fortsatz
- 6: Abkantung
- 7: Buchse
- 8: Auslenkungsabschnitt
- 9: Vorsprung
- 9a: Nase
- 10: äußerer Durchmesser des zapfenförmigen Bereichs
- 11: Abstand der Abkantung zur Verschwenkachse
- 12: Abstand des stegförmigen Bereichs zum Vorsprung
- 13: Durchgang
- 14: Hebelelement
- 15: Öffnung des Hebelelements
- 16: Hebelachse
- 17: Ausnehmung
- 18: Breite der Ausnehmung
- 19: Außenkontur
- 20: Endanschlag
- 21: Begrenzungsabschnitt der Außenkontur
- 22: Verschwenkachse des Befestigungselements
- 23: Aussparung

## Patentansprüche

1. Befestigungselement (1) zur Anbindung von Übertragungsmitteln wie Zugstangen, Bowdenzüge o. dgl. an ein Hebelelement (14), insbesondere für Kraftfahrzeugschlösser, wobei das Befestigungselement (1) zur Kopplung mit einem Übertragungselement gegebenenfalls als Buchse (7) ausgestaltet ist, wobei
• das Befestigungselement (1) eine Bajonettkontur (9, 9a) aufweist, so dass das Befestigungselement im montierten Zustand um eine Verschwenkachse (22) schwenkbar am Hebelelement (14) angelenkt ist;
**dadurch gekennzeichnet, dass**
• das Befestigungselement (1) mit einer Öffnung (15) des Hebelelements (14) verbindbar ausgestaltet ist;
• das Befestigungselement (1) einen senkrecht zu seiner Verschwenkachse (22) verlaufenden stegförmigen Bereich (2) umfasst, der vorzugsweise im montierten Zustand des Befestigungselements (1) mit dem Hebelelement (14) zur Anlage gebracht werden kann.

2. Befestigungselement (1) nach dem vorhergehenden Anspruch, **dadurch gekennzeichnet, dass**
• das Befestigungselement (1) ein oder mehrere bezogen auf die Verschwenkachse (22) des Befestigungselements (1) radiale Vorsprünge (9, 9a) aufweist.

3. Befestigungselement (1) nach einem der vorhergehenden Ansprüche, **dadurch gekennzeichnet, dass**
• das Befestigungselement (1) einen sich parallel zu dessen Verschwenkachse (22) erstreckenden zapfenförmigen Bereich (3) aufweist.

4. Befestigungselement (1) nach einem der vorhergehenden Ansprüche, **dadurch gekennzeichnet, dass**
• das Befestigungselement (1) am stegförmigen Bereich (2) einen sich im Wesentlichen parallel zur Verschwenkachse (22) erstreckenden Fortsatz (5) aufweist, der insbesondere im montierten Zustand des Befestigungselements (1) an einer Außenkontur (19) des Hebelelements (14) verschwenkbar anliegt.

5. Befestigungselement (1) nach dem vorhergehenden Anspruch, **dadurch gekennzeichnet, dass**
• der Fortsatz (5) an der der Außenkontur (19) des Hebelelements (14) zugewandten Seite eine Abkantung (6) aufweist, und/oder
• der Fortsatz (5) stiftförmig ausgebildet ist.

6. Befestigungselement (1) nach einem der vorhergehenden Ansprüche, **dadurch gekennzeichnet, dass**
• der stegförmige Bereich (2) bezogen auf die Verschwenkachse (22) des Befestigungselements (1) auf der Seite des Fortsatzes (5) länger ausgestaltet ist und vorzugsweise auf dieser Seite eine Aussparung (23) aufweist.

7. Befestigungselement (1) nach einem der vorhergehenden Ansprüche, **dadurch gekennzeichnet, dass**
• der zapfenförmige Bereich (3) unterschiedlich dimensionierte radiale Vorsprünge (9, 9a) aufweist, vorzugsweise derart, dass der größer dimensionierte Vorsprung (9) bezogen auf die Verschwenkachse (22) des Befestigungselements (1) auf der Seite des Fortsatzes (5) angeordnet ist.

8. Anbindungsanordnung zur Verbindung eines Übertragungsmittels wie einer Zugstange, eines Bowdenzugs o. dgl. an ein Hebelelement (14), insbesondere für ein Kraftfahrzeugschloss, mit einem Befestigungselement (1) nach einem der vorhergehenden Ansprüche und einem schwenkbar gelagerten Hebelelement (14), wobei
• das Befestigungselement (1) in einer exzentrisch zur Hebelachse (16) des Hebelelements (14) angeordneten Öffnung (15) für das Ein- oder Ausweiten von Betätigungsbewegungen anbringbar ist,
• das Befestigungselement (1) nach Art eines Bajonettverschlusses in der Öffnung (15) des Hebelelements (14) aufgenommen ist, so dass das Befestigungselement (1) schwenkbar am Hebelelement (14) angelenkt ist.

9. Anbindungsanordnung nach dem vorhergehenden Anspruch, **dadurch gekennzeichnet, dass**
• die Öffnung (15) des Hebelelements (14) bezogen auf deren Umfang wenigstens eine sich radial erstreckende Ausnehmung (17) aufweist, die insbesondere korrespondierend zu dem Vorsprung (9, 9a) des Befestigungselements (1) ausgestaltet ist.

10. Anbindungsanordnung nach einem der vorhergehenden Ansprüche 8 oder 9, **dadurch gekennzeichnet, dass**
• das Hebelelement (14) benachbart zur Öffnung (15) eine Außenkontur (19) für das Zusammenwirken mit dem Befestigungselement (1), insbesondere mit dem Fortsatz (5) des Befestigungselements (1) aufweist, vorzugsweise derart, dass ein vorbestimmter Schwenkbereich für das Befestigungselement (1) bereitgestellt wird.

11. Anbindungsanordnung nach einem der vorhergehenden Ansprüche 8 bis 10, **dadurch gekennzeichnet, dass**
• die Außenkontur (19) des Hebelelements (14) einen Endanschlag (20) und/oder einen Begrenzungsabschnitt (21) für die Verschwenkung des Befestigungselements (1) aufweist, wobei der Begrenzungsabschnitt (21) bezogen auf die Verschwenkachse (22) des Befestigungselements (1) als radiale Erhebung ausgeführt ist, insbesondere dergestalt, dass das Befestigungselement (1) nur federelastisch verformend über den Begrenzungsabschnitt (21) hinweg geführt werden kann.

## Claims

1. Fastening element (1) for the connection of transmission equipment, such as pull rods, Bowden cables or similar, to a lever element (14), in particular for motor vehicle latches, whereby the fastening element (1) is, for connection with a transmission element, designed if necessary as a bushing (7) whereby
• the fastening element (1) has a bayonet contour; consequently, the fastening element in the mounted state is coupled to the lever element (14) pivotably around a pivoting axis (22);
**characterized in that**,
• the fastening element (1) is designed to be connectable to an aperture (15) of the lever element (14);
• the fastening element (1) encompasses a area (2) which is bridge-shaped vertically to its pivoting axis (22) which can preferably be made to abut the lever element (14) in the mounted state of the fastening element (1).

2. Fastening element (1) according to the previous claim, **characterized in that**
• the fastening element (1) has one or more radial protrusions (9, 9a) in relation to the pivoting axis (22) of the fastening element (1).

3. Fastening element (1) according to the previous claims, **characterized in that**
• the fastening element (1) has a pin-shaped area (3) extending parallel to its pivoting axis (22).

4. Fastening element (1) according to one of the previous claims, **characterized in that**
• the fixing element (1) in the bridge-shaped area (2) has an extension (5) predominantly extending in parallel to the pivoting axis (22) which in particular in the mounted state of the fixing element (1) pivotably abuts an external contour (19) of the lever element (14).

5. Fastening element (1) according to the previous claim, **characterized in that**
• the extension (5) also has an edge (6) on the side facing the external contour (19) of the lever element (14), and/or
• the extension (5) is formed in a pin shape.

6. Fastening element (1) according to one of the previous claims, **characterized in that**
• the bridge-shaped area (2) is longer on the side of the extension (5) in relation to the swiveling axis (22) of the fixing element (1) and preferably has a recess (23) on this side.

7. Fastening element (1) according to one of the previous claims, **characterized in that**
• the pin-shaped area (3) has radial projections (9. 9a) of different dimensions, preferably such that the larger projection (9) is arranged on the side of the extension (5) in relation to the swiveling axis (22) of the fixing element (1).

8. Connection arrangement for connection of transmission equipment, such as a pull rod, a Bowden cable or similar, on a lever element (14), in particular for a motor vehicle latch, with a fixing element (1) according to one of the previous claims and a pivotably accommodated lever element (14), whereby
• the fixing element (1) can be attached in an aperture (15) arranged excentrically to the lever axis (16) of the lever element (14) for the channeling in or out of activation movements,
• the fixing element (1) is accommodated in the manner of a bayonet fitting in the aperture (15) of the lever element (14) in such a way that the fixing element (1) is pivotably coupled on the lever element (14).

9. Connection arrangement according to the previous claim, **characterized in that**
• the aperture (15) of the lever element (14) has at least one recess (17) radially extending in relation to its circumference which is designed in particular to correspond to the projection (9, 9a) of the fixing element (1).

10. Connection arrangement according to one of the previous claims 8 or 9, **characterized in that**
• the lever element (14) adjacent to the aperture (15) has an external contour (19) for interaction with the fixing element (1) in particular with the extension (5) of the fixing element (1), preferably in such a way that a predetermined swiveling area is provided for the fixing element (1).

11. Connection arrangement according to one of the previous claims 8 to 10, **characterized in that**
• the external contour (19) of the lever element (14) has an end stop (20) and/or a limitation section (21) for the pivoting of the fixing element (1), whereby the limitation section (21) is designed as a radial raised area in relation to the swiveling axis (22) of the fixing element (1), in particular in such a way that the fixing element (1) can be conducted over the limitation section (21) only in a resiliently deforming manner.

## Revendications

1. Elément de fixation (1) pour relier des moyens de transmission, comme des tiges de traction, des câbles Bowden ou similaires, à un élément formant levier (14), en particulier pour des serrures de véhicules à moteur, l'élément de fixation (1) pour le couplage avec un élément de transmission étant arrangé le cas échéant comme douille (7),
• l'élément de fixation (1) présentant un contour à baïonnette (9, 9a) de façon que l'élément de fixation, à l'état monté, soit articulé de manière à pivoter à l'élément formant levier (14) autour d'un axe de pivotement (22) ;
**caractérisé en ce que**
• l'élément de fixation (1) est arrangé avec une ouverture (15) de l'élément formant levier (14) de façon à pouvoir être relié ;
• l'élément de fixation (1) comprenant une zone en forme de traverse (2), passant perpendiculairement à l'axe de pivotement (22), qui peut être posée avec l'élément formant levier (14) de préférence à l'état monté de l'élément de fixation (1).

2. Elément de fixation selon la revendication précédente **caractérisé en ce que**
• l'élément de fixation (1) présente une ou plusieurs parties en saillie radiales (9, 9a) en référence à l'axe de pivotement (22) de l'élément de fixation (1).

3. Elément de fixation (1) selon l'une des revendications précédentes **caractérisé en ce que**
• l'élément de fixation (1) présente une zone en forme de tenon (3) s'étendant parallèlement à son axe de pivotement (22)

4. Elément de fixation (1) selon l'une des revendications précédentes **caractérisé en ce que**
• l'élément de fixation (1) à la zone en forme de traverse (2) présente un prolongement (5) s'étendant pour l'essentiel parallèlement à l'axe de pivotement (22) qui pose de façon à pouvoir pivoter, en particulier à l'état monté de l'élément de fixation (1), contre un contour extérieur (19) de l'élément formant levier (14).

5. Elément de fixation (1) selon la revendication précédente **caractérisé en ce que**
• le prolongement (5) au côté orienté vers le contour extérieur (19) de l'élément formant levier (14) présente un rebord (6) et/ou
• le prolongement (5) est formé en forme de pointe.

6. Elément de fixation (1) selon l'une des revendications précédentes **caractérisé en ce que**
• la zone en forme de traverse (2) est arrangée de façon plus longue sur le côté du prolongement (5) en référence à l'axe de pivotement (22) de l'élément de fixation (1) et présente de préférence sur ce côté un creux (23).

7. Elément de fixation (1) selon l'une des revendications précédentes **caractérisé en ce que**
• la zone en forme de tenon (3) présente des saillies radiales (9, 9a) à dimensions différentes, de préférence de façon que la saillie ayant le plus grand dimensionnement (9) en référence à l'axe de pivotement (22) de l'élément de fixation (1) soit placé sur le côté du prolongement (5).

8. Disposition de raccordement pour relier un moyen de transmission, comme une tige de traction, un câble Bowden ou similaires, à un élément formant levier (14), en particulier pour des serrures de véhicules à moteur, avec un élément de fixation (1) selon l'une des revendications précédentes et avec un élément formant levier (14) logé de façon à pouvoir pivoter,
• l'élément de fixation (1) pouvant être monté dans une ouverture (15) disposée de façon excentrée par rapport à l'axe de levier (16) de l'élément formant levier (14) pour introduire ou évacuer des mouvements d'actionnement,
• l'élément de fixation (1) est logé, selon le type d'une fermeture baïonnette, dans l'ouverture (15) de l'élément formant levier (14) de façon que l'élément de fixation (1) est articulé de façon à pouvoir pivoter à l'élément formant levier (14).

9. Disposition de raccordement selon la revendication précédente **caractérisée en ce que**
• l'ouverture (15) de l'élément formant levier (14) présente, en référence à sa circonférence, au moins un creux (17) s'étendant radialement qui est arrangée en particulier de façon correspondante à la saillie (9, 9a) de l'élément de fixation (1).

10. Disposition de raccordement selon l'une des revendications précédentes 8 ou 9 **caractérisée en ce que**
• l'élément formant levier (14) présente un contour extérieur (19) contigu à l'ouverture (15) pour l'interaction avec l'élément de fixation (1), en particulier avec le prolongement (5) de l'élément de fixation (1), de préférence de façon qu'une certaine plage de pivotement prédéterminée soit mise à la disposition de l'élément de fixation (1).

11. Disposition de raccordement selon l'une des revendications précédentes 8 à 10 **caractérisée en ce que**
• le contour extérieur (19) de l'élément formant levier (14) présente une butée finale (20) et/ou une section de délimitation (21) pour le pivotement de l'élément de fixation (1), la section de délimitation (21) étant exécutée comme bosse radiale en référence à l'axe de pivotement (22) de l'élément de fixation (1), en particulier de façon que l'élément de fixation (1) ne puisse être guidé qu'avec déformation élastique au-delà de la section de délimitation (21).
